# EUROPÄISCHE PATENTANMELDUNG

(11) **EP 2 141 420 A2**
(43) Veröffentlichungstag der Anmeldung: **06.01.2010**
(21) Anmeldenummer: 09003280.6
(22) Anmeldetag: 06.03.2009
(51) Int. Cl.: F24D 19/10

(54) **Gebäudeheiz- und/oder - kühlvorrichtung**

(30) Priorität: 04.07.2008 EP 08012159
(71) Anmelder: Roth Werke GmbH, 35232 Dautphetal (DE)
(72) Erfinder:
(74) Vertreter: Rohmann, Michael

(57) **Zusammenfassung**

Gebäudeheiz- und/oder -kühlvorrichtung mit zumindest einer Wärmepumpe und mit zumindest einer Solareinrichtung zur Erzeugung von thermischer Energie. Die thermische Energie ist auf ein fluides Medium übertragbar. Die Wärmepumpe weist zwei Betriebszustände auf, wobei im ersten Betriebszustand die Umgebungsluft Wärmequelle für die Wärmepumpe ist. In einem zweiten Betriebszustand ist die mit der Solareinrichtung erzeugte und auf ein flüssiges Wärmeträgermedium übertragene thermische Energie mittels einer Wärmeübertragungseinrichtung auf Umgebungsluft übertragbar und diese erwärmte Umgebungsluft ist dann Wärmequelle für die Wärmepumpe.

## Beschreibung

Die Erfindung betrifft eine Gebäudeheiz- und/oder -kühlvorrichtung mit zumindest einer Wärmepumpe und mit zumindest einer Solareinrichtung zur Erzeugung von thermischer Energie, wobei die thermische Energie auf ein fluides Medium übertragbar ist. Die Erfindung betrifft außerdem ein Verfahren zum Heizen und/oder Kühlen eines Gebäudes. - Die erfindungsgemäße Vorrichtung und das erfindungsgemäße Verfahren eignen sich grundsätzlich nicht nur zum Heizen sondern auch zum Kühlen eines Gebäudes bzw. Bauwerkes. Der Einfachheit halber wird nachfolgend in erster Linie auf das Heizen eines Gebäudes Bezug genommen und es werden die Begriffe Gebäudeheizvorrichtung bzw. einfach verkürzt Vorrichtung verwendet. Durch entsprechende Anpassung bzw. Umrüstung der Vorrichtung ist aber auch ein Kühlen eines Gebäudes bzw. Bauwerkes möglich.

Aus der Praxis sind Sole/Wasser-Wärmepumpen bekannt, die eine hohe Energieeffizienz aufweisen. Eine solche Vorrichtung weist jedoch erhebliche Nachteile auf. Diese sind insbesondere in dem problematischen Eingriff in den Boden eines Grundstückes sowie in dem großen Installationsaufwand und den nachteilhaft hohen Kosten zu sehen.

Demgegenüber liegt der Erfindung das technische Problem zugrunde eine Vorrichtung der eingangs beschriebenen Art anzugeben mit der die genannten Nachteile vermieden werden können und die sich insbesondere durch eine hohe Energieeffizienz sowie durch geringen Installationsaufwand und geringen Kostenaufwand auszeichnet.

Zur Lösung dieses technischen Problems lehrt die Erfindung eine Gebäudeheiz- und/oder -kühlvorrichtung mit zumindest einer Wärmepumpe und mit zumindest einer Solareinrichtung zur Erzeugung von thermischer Energie, wobei die thermische Energie auf ein fluides Medium übertragbar ist,
wobei die Wärmepumpe zumindest zwei Betriebszustände aufweist, wobei im ersten Betriebszustand die Umgebungsluft Wärmequelle für die Wärmepumpe ist,
wobei im zweiten Betriebszustand die mit der Solareinrichtung erzeugte und auf ein flüssiges Wärmeträgermedium übertragene thermische Energie mittels einer Wärmeübertragungseinrichtung auf die Umgebungsluft als gasförmiges Wärmeträgermedium übertragbar ist und wobei die auf diese Weise erwärmte Umgebungsluft Wärmequelle für die Wärmepumpe ist.

Zweckmäßigerweise weist die Wärmepumpe lediglich zwei Betriebszustände auf, nämlich den vorgenannten ersten Betriebszustand und den vorgenannten zweiten Betriebszustand. In beiden Betriebszuständen wird also quellseitig mit Umgebungsluft als Wärmequelle gearbeitet. Im ersten Betriebszustand ist die Umgebungsluft unmittelbare Wärmequelle. Im zweiten Betriebszustand wird dagegen die Wärme von dem flüssigen Wärmeträgermedium auf die zugeführte Umgebungsluft bzw. auf die angesaugte Umgebungsluft übertragen und die auf diese Weise erwärmte Umgebungsluft ist dann die Wärmequelle für die Wärmepumpe.

Umgebungsluft meint insbesondere von außen bzw. von der Außenseite eines Gebäudes zugeführte bzw. angesaugte Umgebungsluft. Es liegt im Rahmen der Erfindung, dass die zweckmäßigerweise von der Außenseite des Gebäudes zugeführte/angesaugte Umgebungsluft in die Wärmepumpe bzw. in die Wärmeübertragungseinrichtung der Wärmepumpe eingeführt wird. Nach empfohlener Ausführungsform wird im zweiten Betriebszustand der Wärmepumpe das flüssige Wärmeträgermedium in der Wärmeübertragungseinrichtung durch zumindest eine Leitung bzw. Rohrleitung geführt, welche Leitung bzw. Rohrleitung von der zu erwärmenden Umgebungsluft umströmt wird bzw. unmittelbar umströmt wird.

Es liegt im Rahmen der Erfindung, dass die thermische Energie einerseits mit der Wärmepumpe und andererseits mit der Solareinrichtung erzeugt wird und dass die Wärmepumpe und die Solareinrichtung bezüglich des thermischen Energiebedarfs aufeinander abgestimmt werden. - Die erfindungsgemäße Vorrichtung eignet sich zum Heizen und/oder Kühlen eines Gebäudes und auch zur Brauchwassererwärmung für ein Gebäude. Das mit der erfindungsgemäßen Vorrichtung erwärmte fluide Medium wird zweckmäßigerweise für einen Heizkreislauf eines Gebäudes eingesetzt oder zur Erwärmung von Brauchwasser für das Gebäude. Die erfindungsgemäße Vorrichtung kann aber auch als Kühlvorrichtung arbeiten. Dann erfolgt eine entsprechende Prozessumkehr bei der Wärmepumpe. In diesem Fall dient das fluide Medium auf der Sekundärseite der Wärmepumpe als Wärmequelle und die dort entzogene Wärme wird auf der Primärseite der Wärmepumpe an die Umgebungsluft abgegeben. Die in der Solareinrichtung erzeugte thermische Energie wird bei dieser Betriebsweise zweckmäßigerweise lediglich in der weiter unten erläuterten Speichereinheit gespeichert bzw. zwischengespeichert.

Nach einer ersten bevorzugten Ausführungsform der Erfindung ist das fluide Medium ein flüssiges Medium und zwar insbesondere Wasser oder Sole (Gemisch Wasser/Frostschutzmittel). Dann ist die Wärmepumpe in beiden Betriebszuständen eine Gas-Flüssig-Wärmepumpe. - Gemäß einer zweiten bevorzugten Ausführungsform der Erfindung ist das fluide Medium ein gasförmiges Medium und zwar insbesondere Luft. In diesem Fall ist die Wärmepumpe in beiden Betriebszuständen eine Gas-Gas-Wärmepumpe. Der Erfindung liegt die Erkenntnis zugrunde, dass eine Gas-Flüssig-Wärmepumpe bzw. eine Luft-Wasser-Wärmepumpe sowie eine Gas-Gas-Wärmepumpe bzw. eine Luft-Luft-Wärmepumpe sich durch vorteilhaft geringen Kostenaufwand auszeichnet.

Es liegt im Rahmen der Erfindung, dass die Wärmepumpe von dem ersten Betriebszustand in den zweiten Betriebszustand umschaltbar ist und umgekehrt. Die Umschaltung wird in Abhängigkeit von der zur Verfügung stehenden thermischen Energie im flüssigen Wärmeträgermedium einerseits und in der Umgebungsluft andererseits vorgenommen. Zweckmäßigerweise wird eine Umschaltung auf den ersten Betriebszustand mit der Umgebungsluft durchgeführt, wenn die thermische Energie aus der Solareinrichtung im flüssigen Wärmeträgermedium nicht ausreichend hoch ist bzw. insbesondere geringer ist als die in der Umgebungsluft zur Verfügung stehende thermische Energie. Es liegt im Rahmen der Erfindung, dass hierzu die Temperatur des flüssigen Wärmeträgermediums zum einen und die Temperatur der Umgebungsluft zum anderen erfasst wird und dass bei Unterschreitung vorgegebener Solltemperaturen eine Umschaltung auf den anderen Betriebszustand vorzugsweise automatisch stattfindet. Grundsätzlich können im Rahmen der Erfindung bzw, mit der erfindungsgemäßen Wärmepumpe auch beide Betriebszustände parallel zueinander gefahren werden.

Zweckmäßigerweise kann die thermische Energie aus der Solareinrichtung unmittelbar und ohne Zwischenschaltung der Wärmepumpe auf das fluide Medium übertragen werden oder die thermische Energie aus der Solareinrichtung kann mit dem flüssigen Wärmeträgermedium unter Zwischenschaltung der Wärmeübertragungseinrichtung bzw. der Wärmepumpe auf das fluide Medium übertragen werden. Thermische Energie wird in der Solareinrichtung auf das flüssige Wärmeträgermedium übertragen wird und wenn die Temperatur dieses Wärmeträgermediums ausreichend hoch für die unmittelbare Erwärmung des fluiden Mediums ist, wird die thermische Energie von dem Wärmeträgermedium ohne Zwischenschaltung der Wärmepumpe auf das fluide Medium übertragen.

Vorzugsweise ist hierzu ein Wärmetauscher vorgesehen, der von dem Wärmeträgermedium durchströmt wird und von dem thermische Energie auf das fluide Medium übertragen wird. Wenn die Temperatur des Wärmeträgermediums aus der Solareinrichtung nicht ausreichend hoch zur unmittelbaren Erwärmung des fluiden Mediums ist, wird die thermische Energie von dem Wärmeträgermedium unter Zwischenschaltung der Wärmeübertragungseinrichtung bzw. der Wärmepumpe auf das fluide Medium übertragen. Es liegt dann im Rahmen der Erfindung, dass die thermische Energie aus der Solareinrichtung mit dem flüssigen Wärmeträgermedium unmittelbar zur Wärmepumpe bzw. zur Wärmeübertragungseinrichtung überführt wird. Unmittelbar meint dabei insbesondere ohne Zwischenschaltung einer Speichereinheit zur Speicherung bzw. Zwischenspeicherung der thermischen Energie. Zweckmäßigerweise wird für das Wärmeträgermedium aus der Solareinrichtung eine Solltemperatur vorgegeben und bei Unterschreitung dieser Solltemperatur wird die Wärmepumpe zur Übertragung der thermischen Energie auf das fluide Medium zwischengeschaltet. Mit der Wärmepumpe wird die thermische Energie aus der mit dem Wärmeträgermedium erwärmten Umgebungsluft auf das fluide Medium übertragen und die Wärmepumpe stellt die zusätzliche thermische Energie zur Verfügung, die zur Erreichung der gewünschten Temperatur des fluiden Mediums erforderlich ist.

Es wurde vorstehend erläutert, dass die Wärmepumpe bzw. die Wärmeübertragungseinrichtung und die Wärmepumpe zweckmäßigerweise zwischengeschaltet wird, wenn die thermische Energie aus der Solareinrichtung nicht zur unmittelbaren Erwärmung des fluiden Mediums ausreicht. Dabei kann die thermische Energie aus der Solareinrichtung mit dem flüssigen Wärmeträgermedium unmittelbar zur Wärmepumpe überführt werden.

Gemäß bevorzugter Ausführungsform ist die Solareinrichtung mit zumindest einer Speichereinheit mit der Maßgabe verbunden, dass in der Solareinrichtung erzeugte thermische Energie der Speichereinheit zuführbar ist und in der Speichereinheit speicherbar bzw. zwischenspeicherbar ist und wobei diese gespeicherte thermische Energie bei Bedarf unter Zwischenschaltung der Wärmepumpe bzw. der Wärmeübertragungseinrichtung auf das fluide Medium übertragbar ist. Thermische Energie aus der Solareinrichtung wird insbesondere dann in die Speichereinheit eingeführt, wenn die Solareinrichtung einen Überschuss an thermischer Energie aufweist. Überschuss an thermischer Energie meint den Zustand, in dem die thermische Energie ausreichend hoch zur unmittelbaren Erwärmung des fluiden Mediums (ohne Zwischenschaltung der Wärmepumpe) ist und darüber hinaus noch thermische Energie zur Verfügung steht. Dann wird also zweckmäßigerweise dieser Energieüberschuss gleichsam in der Speichereinheit gespeichert bzw. zwischengespeichert. Die in der Speichereinheit gespeicherte thermische Energie wird der Wärmepumpe insbesondere dann zugeführt, wenn die thermische Energie bzw. die Temperatur des Wärmeträgermediums in der Solareinrichtung nicht mehr zur unmittelbaren Erwärmung des fluiden Mediums ausreicht und vorzugsweise wenn die thermische Energie bzw. die Temperatur in der Solareinrichtung geringer ist als die thermische Energie bzw. die Temperatur in der Speichereinheit. Vor allem wenn sowohl in der Solareinrichtung als auch in der Speichereinheit lediglich eine geringe Menge an thermischer Energie zur Verfügung steht, wird zweckmäßigerweise automatisch auf den ersten Betriebszustand der Wärmepumpe mit der Umgebungsluft als Wärmequelle umgeschaltet. Dann wird der Umgebungsluft Wärme durch die Wärmepumpe entzogen und zur Erwärmung des fluiden Mediums genutzt.

Es liegt im Rahmen der Erfindung, dass die in der Speichereinheit gespeicherte/zwischengespeicherte thermische Energie - abgesehen von eventuell aus dem benachbarten Erdreich aufgenommener Erdwärme - ausschließlich bzw. im Wesentlichen aus der Solareinrichtung stammt. Zweckmäßigerweise stammen zumindest 90 %, bevorzugt zumindest 95 % und sehr bevorzugt zumindest 98 % der der Speichereinheit von außen zugeführten thermischen Energie (und nicht aus der Erdwärme resultierenden thermischen Energie) aus der Solareinrichtung. - Vorzugsweise wird dagegen Wärme aus der Umgebungsluft - insbesondere im ersten Betriebszustand der Wärmepumpe - unmittelbar und ausschließlich als Wärmequelle für die Wärmepumpe verwendet.

Bei der Speicherung bzw. Zwischenspeicherung der thermischen Energie aus der Solareinrichtung in der Speichereinheit wird die thermische Energie zweckmäßigerweise von dem Wärmeträgermedium aus der Solareinrichtung über zumindest einen Wärmetauscher an ein Speichermedium der Speichereinheit übertragen. Bei dem Speichermedium handelt es sich vorzugsweise um ein flüssiges Speichermedium, insbesondere um Wasser. Es liegt im Rahmen der Erfindung, dass das Speichermedium in zumindest einem Speicherbehälter der Speichereinheit aufgenommen ist. Gemäß einer Ausführungsform der Erfindung ist in dem Speicherbehälter zumindest ein Wärmetauscher angeordnet, über den die thermische Energie von dem Wärmeträgermedium aus der Solareinrichtung auf das Speichermedium der Speichereinheit übertragen wird. Nach - einer anderen Ausführungsform kann dabei auch mit einem externen, außerhalb des Speicherbehälters angeordneten Wärmetauscher gearbeitet werden und das Speichermedium aus der Speichereinheit wird dann durch diesen Wärmetauscher geführt. - Wenn dann thermische Energie von der Speichereinheit zur Wärmepumpe bzw. direkt zur Wärmepumpe überführt werden soll, kann das in der Speichereinheit erwärmte bzw. von dem Speichermedium erwärmte Wärmeträgermedium über zumindest eine Leitung der Wärmepumpe bzw. der Wärmeübertragungseinrichtung zugeführt werden. Die Leitung ist dabei zweckmäßigerweise an den internen oder externen Wärmetauscher der Speichereinheit angeschlossen.

Es liegt im Rahmen der Erfindung, dass die Speichereinheit bzw. ein dazugehöriger Speicherbehälter und die Wärmepumpe separate Bauteile bilden. Es liegt fernerhin im Rahmen der Erfindung, dass die Wärmepumpe bzw. die Wärmeübertragungseinrichtung außerhalb der Speichereinheit bzw. eines dazugehörigen Speicherbehälters angeordnet ist.

Es empfiehlt sich, dass die Speichereinheit zumindest einen wärmeisolierten Speicherbehälter mit einem Speichermedium für die Speicherung/Zwischenspeicherung der thermischen Energie aufweist. Der Speicherbehälter bzw. die Wandungen des Speicherbehälters bestehen zweckmäßigerweise aus Kunststoff. Wie oben bereits dargelegt, handelt es sich bei dem Speichermedium empfohlenermaßen um ein flüssiges Speichermedium und nach einer bevorzugten Ausführungsvariante um Wasser. Es liegt aber auch im Rahmen der Erfindung, dass ein Speichermedium mit einem höheren Energie-Speicherpotential als Wasser eingesetzt wird. Dabei kann es sich auch um ein Speichermedium handeln, das sich durch wechselnde Aggregatzustände auszeichnet (Phasenwechselmaterial).

Gemäß einer Ausführungsform der Erfindung ist die Speichereinheit als unterirdische Erdspeichereinheit bzw. der Speicherbehälter als unterirdischer Erdspeicherbehälter ausgebildet. Vorzugsweise ist die Erdspeichereinheit in einer Tiefe von 0,5 bis 5 m im Erdreich angeordnet. Tiefe meint hier den Abstand der Oberseite bzw. Oberkante der Erdspeichereinheit bzw. eines Speicherbehälters der Erdspeichereinheit von der Erdoberfläche. Empfohlenermaßen ist die Erdspeichereinheit zumindest 0,6 m, vorzugsweise zumindest 0,8 m und bevorzugt zumindest 1 m von der Erdoberfläche beabstandet in dem Erdreich angeordnet. Nach bevorzugter Ausführungsform der Erfindung ist die Erdspeichereinheit in einer Tiefe zwischen 0,5 und 4 m, zweckmäßigerweise zwischen 0,5 und 3,5 m, vorzugsweise zwischen 0,6 und 3 m und sehr bevorzugt zwischen 0,8 und 3 m im Erdreich angeordnet. Es liegt im Rahmen der Erfindung, dass die Erdspeichereinheit außerhalb des zugeordneten Gebäudes angeordnet ist.

Nach einer anderen Ausführungsform der Erfindung ist die Speichereinheit als oberirdische Speichereinheit bzw. ein Speicherbehälter als oberirdischer Speicherbehälter ausgebildet. Die Speichereinheit bzw. der Speicherbehälter befindet sich dann oberhalb der Erdoberfläche bzw. im Wesentlichen oberhalb der Erdoberfläche.

Sowohl die unterirdische Speichereinheit bzw. der unterirdische Speicherbehälter als auch die oberirdische Speichereinheit bzw. der oberirdische Speicherbehälter kann mit einem internen Wärmetauscher oder mit einem externen Wärmetauscher arbeiten. Der interne Wärmetauscher ist zweckmäßigerweise in dem Speicherbehälter der Speichereinheit angeordnet und tauscht thermische Energie zwischen dem Speichermedium in dem Speicherbehälter und dem Wärmeträgermedium. Der externe Wärmetauscher ist zweckmäßigerweise außerhalb des Speicherbehälters der Speichereinheit angeordnet und hier wird ebenfalls thermische Energie zwischen dem Wärmeträgermedium und dem Speichermedium getauscht, wobei sowohl das Wärmeträgermedium als auch das Speichermedium durch diesen externen Wärmetauscher geführt werden müssen.

Eine besonders bevorzugte Ausführungsform der Erfindung ist dadurch gekennzeichnet, dass eine Photovoltaikeinrichtung vorgesehen ist, mit der die Vorrichtung bzw. Komponenten der Vorrichtung mit elektrischer Energie versorgt werden. Vorzugsweise handelt es sich bei der Wärmepumpe um eine elektrisch betriebene Wärmepumpe und dann stellt die Photovoltaikeinrichtung die elektrische Energie für den Betrieb der Wärmepumpe zur Verfügung bzw. soweit wie möglich zur Verfügung. Photovoltaikeinrichtung meint eine Einrichtung zur Umwandlung von Strahlungsenergie bzw. Sonnenenergie in elektrische Energie. Dass die Vorrichtung bzw. die Komponenten der Vorrichtung und insbesondere die Wärmepumpe von der Photovoltaikeinrichtung mit elektrischer Energie versorgt werden, meint insbesondere, dass die mit der Photovoltaikeinrichtung erzeugte elektrische Energie zunächst in das öffentliche Stromnetz eingespeist wird und die Vorrichtung bzw. die Komponenten der Vorrichtung, insbesondere die Wärmepumpe mit elektrischer Energie aus diesem Stromnetz versorgt werden. Zweckmäßigerweise wird also die Vorrichtung indirekt von der Photovoltaikeinrichtung unter Zwischenschaltung des öffentlichen Stromnetzes versorgt. Es liegt also im Rahmen der Erfindung, dass die für den Betrieb der Vorrichtung bzw. für den Betrieb von Komponenten der Vorrichtung und insbesondere für den Betrieb der Wärmepumpe erforderliche elektrische Energie von der Photovoltaikeinrichtung - zweckmäßigerweise indirekt - zur Verfügung gestellt bzw. so weit wie möglich zur Verfügung gestellt wird. Bevorzugt ist dabei eine hundertprozentige Energiedeckung. Es liegt im Rahmen der Erfindung, dass die Photovoltaikeinrichtung mit Solarzellen arbeitet. Gemäß einer bevorzugten Ausführungsform der Erfindung werden Komponenten der Photovoltaikeinrichtung, insbesondere Solarzellen der Photovoltalkeinrichtung im Außenbereich bzw. an der Außenseite des Gebäudes angeordnet. So können diese Komponenten bzw. Solarzellen insbesondere auf dem Dach eines Gebäudes vorgesehen werden. Eine besonders bevorzugte Ausführungsform der Erfindung zeichnet sich dadurch aus, dass die Größe und/oder die Leistung und/oder die Anordnung der Photovoltaikeinrichtung auf den Energiebedarf der Vorrichtung bzw. auf den Energiebedarf der Wärmepumpe abgestimmt ist. Die Photovoltaikeinrichtung wird empfohlenermaßen so ausgelegt bzw. ausgewählt, dass sie die für die erfindungsgemäße Vorrichtung erforderliche elektrische Energie liefern kann und zwar insbesondere die elektrische Energie für den Betrieb der Wärmepumpe und ggf. auch elektrische Energie für weitere Vorrichtungskomponenten und/oder für die Steuerung und/oder Regelung der erfindungsgemäßen Vorrichtung.

Es empfiehlt sich, dass Komponenten der Solareinrichtung und der Photovoltaikeinrichtung an der Außenseite des zugeordneten Gebäudes angeordnet bzw. angebracht sind. Vorzugsweise sind die an der Außenseite des zugeordneten Gebäudes angebrachten Komponenten der Solareinrichtung und der Photovoltaikeinrichtung bezüglich ihrer Abmessungen und/oder ihrer Form und/oder ihrer Farbe und/oder ihres Designs identisch bzw. im Wesentlichen identisch. Außenseite des Gebäudes meint insbesondere das Dach des Gebäudes. Mit Komponenten der Einrichtungen sind vor allem Solarzellen bzw. Solarmodule gemeint. Zweckmäßigerweise wird die Vorrichtung so ausgelegt, dass die an der Außenseite des Gebäudes angebrachten Komponenten der Solareinrichtung und der Photovoltaikeinrichtung ein harmonisches Gesamtbild aufgrund ihres aufeinander abgestimmten Designs ergeben.

Gemäß einer bevorzugten Ausführungsvariante weist die Solareinrichtung Komponenten auf, die sowohl thermische als auch elektrische Energie erzeugen können. Nach dieser Ausführungsvariante sind die Komponenten der Solareinrichtung also so aufgebaut, dass sie in einer Einheit sowohl die thermische als auch die elektrische Energie erzeugen. Es handelt sich dann also gleichsam um eine kombinierte Solar- und Photovoltaikeinrichtung.

Nach bevorzugter Ausführungsform der Erfindung wird die Wärmepumpe elektrisch bzw. elektromotorisch betrieben. Es liegt aber auch im Rahmen der Erfindung, dass die Wärmepumpe einen thermischen Antrieb auf Basis von Öl und/oder Gas haben kann. - Es wurde bereits oben dargelegt, dass das fluide Medium nach einer Ausführungsform eine Flüssigkeit, vorzugsweise Wasser oder Sole sein kann und nach einer anderen Ausführungsform ein Gas, vorzugsweise Luft sein kann. Bei dem flüssigen Wärmeträgermedium handelt es sich empfohlenermaßen um ein wässriges Medium, d. h. um Wasser oder um eine wässrige Mischung oder um eine wässrige Lösung. Vorzugsweise besteht das flüssige Wärmeträgermedium aus Wasser oder aus Sole und besonders bevorzugt aus Sole.

Zur Lösung des technischen Problems lehrt die Erfindung weiterhin ein Verfahren zum Heizen und/oder Kühlen eines Gebäudes, wobei thermische Energie von zumindest einer Wärmepumpe und von zumindest einer Solareinrichtung erzeugt wird und auf ein fluides Medium übertragen wird, wobei in einem ersten Betriebszustand der Wärmepumpe Umgebungsluft als Wärmequelle für die Wärmepumpe eingesetzt wird und wobei in einem zweiten Betriebszustand der Wärmepumpe die mit der Solareinrichtung erzeugte und auf ein flüssiges Wärmeträgermedium übertragene thermische Energie mittels einer Wärmeübertragungseinrichtung auf die Umgebungsluft übertragen wird, wobei die erwärmte Umgebungsluft als Wärmequelle für die Wärmepumpe eingesetzt wird. Bevorzugte Ausführungsformen des erfindungsgemäßen Verfahrens werden in den Patentansprüchen 12 bis 15 beansprucht.

Vorzugsweise wird die erfindungsgemäße Vorrichtung bzw. wird das erfindungsgemäße Verfahren so ausgelegt, dass ein großer Teil der thermischen Energie für das fluide Medium von der Solareinrichtung zur Verfügung gestellt wird. Zweckmäßigerweise wird über 30 %, bevorzugt über 40 % und besonders bevorzugt über 50 % der thermischen Energie für das fluide Medium von der Solareinrichtung zur Verfügung gestellt. Die restliche thermische Energie für das fluide Medium wird durch die Wärmepumpe erzeugt bzw. von der Wärmepumpe zur Verfügung gestellt. Die Solareinrichtung wird dazu vorzugsweise entsprechend ausgelegt bzw. die Absorberfläche der Solareinrichtung und/oder die Speicherkapazität der Solareinrichtung wird entsprechend ausgelegt.

Der Erfindung liegt die Erkenntnis zugrunde, dass die erfindungsgemäße Vorrichtung sehr effektiv und mit hohem Wirkungsgrad arbeitet und nichtsdestoweniger mit relativ geringem Kostenaufwand verwirklicht werden kann. Fernerhin ist der Aufbau und die Installation der erfindungsgemäßen Vorrichtung im Vergleich zu vielen aus dem Stand der Technik bekannten Vorrichtungen deutlich weniger aufwendig. Die erfindungsgemäße Vorrichtung und das erfindungsgemäße Verfahren kann in vorteilhafter Weise ausschließlich oder fast ausschließlich durch Inanspruchnahme von Umweltenergie betrieben werden. Das gilt insbesondere auch für die Ausführungsform bei der die elektrische Energie für den Betrieb der Vorrichtung bzw. insbesondere für den Betrieb der Wärmepumpe von der Photovoltaikeinrichtung zur Verfügung gestellt wird. Hierdurch werden beachtliche Kosten eingespart. Die Erfindung zeichnet sich insgesamt durch besondere Umweltfreundlichkeit aus.

Nachfolgend wird die Erfindung anhand einer lediglich ein Ausführungsbeispiel darstellenden Zeichnung näher erläutert. Es zeigen in schematischer Darstellung:
- Fig. 1: eine Vorrichtung zum Heizen eines Gebäudes bzw. zur Brauch- wassererwärmung für ein Gebäude und
- Fig. 2: den Gegenstand gemäß Fig. 1 in einer anderen Ausführungsform.

Die in den Figuren dargestellte Vorrichtung weist als wesentliche Komponenten eine Wärmepumpe 1, eine Solareinrichtung 3, eine Erdspeichereinheit 8 und eine Photovoltaikeinrichtung 2 auf. Die Erdspeichereinheit 8 könnte grundsätzlich auch durch eine oberirdische Speichereinheit ersetzt werden. Die Wärmepumpe 1 zeichnet sich durch zwei Betriebszustände aus. Im ersten Betriebszustand ist die Umgebungsluft die Wärmequelle für die Wärmepumpe 1. Hierzu wird Umgebungsluft angesaugt und dient unmittelbar als Wärmequelle für die Wärmepumpe 1. Die entsprechenden Anschlüsse für die Umgebungsluft an der Wärmepumpe 1 sind mit dem Bezugszeichen 20 gekennzeichnet. Die Wärmepumpe 1 ist in einen zweiten Betriebszustand umschaltbar, in dem ebenfalls die Umgebungsluft Wärmequelle für die Wärmepumpe 1 ist. Allerdings ist in diesem zweiten Betriebszustand die Umgebungsluft nicht unmittelbar Wärmequelle für die Wärmepumpe 1. Vielmehr wird im zweiten Betriebszustand die mit der Solareinrichtung 3 erzeugte und auf ein flüssiges Wärmeträgermedium übertragene thermische Energie mittels einer Wärmeübertragungseinrichtung 22 auf die Umgebungsluft übertragen. Diese mit der thermischen Energie aus der Solareinrichtung erwärmte Umgebungsluft ist dann die Wärmequelle für die Wärmepumpe 1. Die Anschlüsse für das flüssige Wärmeträgermedium an der Wärmepumpe 1 sind mit dem Bezugszeichen 21 gekennzeichnet. In den Figuren ist angedeutet worden, dass das flüssige Wärmeträgermedium durch zumindest eine Rohrleitung 23 in der Wärmeübertragungseinrichtung 22 der Wärmepumpe 1 geführt wird. Über die Anschlüsse 20 wird angesaugte Umgebungsluft der Wärmeübertragungseinrichtung 22 zugeführt und die Umgebungsluft umströmt die zumindest eine Rohrleitung 23, so dass die thermische Energie von dem flüssigen Wärmeträgermedium auf die Umgebungsluft übertragen wird. Die auf diese Weise erwärmte Umgebungsluft ist dann die Wärmequelle für die Wärmepumpe 1.

In der Solareinrichtung 3 wird ein flüssiges Wärmeträgermedium erwärmt. Nach einem ersten Arbeitsmodus wird das erwärmte Wärmeträgermedium über die Versorgungsleitung 4 zur unmittelbaren Erwärmung des fluiden Mediums - ohne Zwischenschaltung der Wärmepumpe 1 - abgeführt. Dieser erste Arbeitsmodus wird dann gewählt, wenn die thermische Energie aus der Solareinrichtung 3 bzw. die Temperatur des Wärmeträgermediums aus der Solareinrichtung 3 ausreichend hoch zur unmittelbaren Erwärmung des fluiden Mediums ist. Bei diesem ersten Arbeitsmodus wird das in der Solareinrichtung 3 erwärmte Wärmeträgermedium in einen in einem Speicher 5 angeordneten Wärmetauscher 6 eingeführt. In diesem Speicher 5 befindet sich das fluide Medium und die mit im Wärmeträgermedium mitgeführte thermische Energie wird auf das zu erwärmende fluide Medium getauscht. Das durch diesen Wärmetauschprozess abgekühlte Wärmeträgermedium wird durch die Rückführungsleitung 7 wieder zurück zur Solareinrichtung 3 gefördert.

Wenn die thermische Energie aus der Solareinrichtung 3 aber nicht ausreichend hoch für die vorstehend erläuterte unmittelbare Fluiderwärmung ist, kann in einem zweiten Arbeitsmodus das in der Solareinrichtung 3 erwärmte Wärmeträgermedium über die Versorgungsleitung 4 bei entsprechender Einstellung des Dreiwegeventils 17 über die Zuleitung 13 direkt der Wärmepumpe 1 zugeführt werden. Die thermische Energie des Wärmeträgermediums aus der Solareinrichtung 3 wird hier zunächst in der Wärmeübertragungseinrichtung 22 auf die Umgebungsluft als gasförmiges Wärmeträgermedium übertragen. Die erwärmte Umgebungsluft dient dann als Wärmequelle für die Wärmepumpe 1. Die Wärmepumpe stellt die zusätzliche thermische Energie zur Verfügung, die zur Erwärmung des fluiden Mediums auf die erforderliche Temperatur notwendig ist. Das auf diese Weise erwärmte fluide Medium wird dann in den Speicher 5 geführt. Das durch den vorstehend beschriebenen Wärmetauschprozess abgekühlte flüssige Wärmeträgermedium wird über die Abflussleitung 14 bei entsprechend eingestelltem Dreiwegeventil 18 über die Rückführungsleitung 7 wieder der Solareinrichtung 3 zugeführt.

Insbesondere bei einem Überschuss von thermischer Energie in der Solareinrichtung 3 kann das in der Solareinrichtung 3 erwärmte Wärmeträgermedium weiterhin auch über die Versorgungsleitung 4 bei entsprechend eingestelltem Dreiwegeventil 17 in die Erdspeichereinheit 8 eingeführt werden und hier wird die thermische Energie des Wärmeträgermediums zwischengespeichert. Vorzugsweise und im Ausführungsbeispiel nach den Figuren weist die Erdspeichereinheit 8 einen Speicherbehälter 15 aus Kunststoff auf, der Wasser als Speichermedium für die thermische Energie enthält. In diesem Speicherbehälter 15 wird also die aus der Solareinrichtung 3 zugeführte thermische Energie zwischengespeichert.

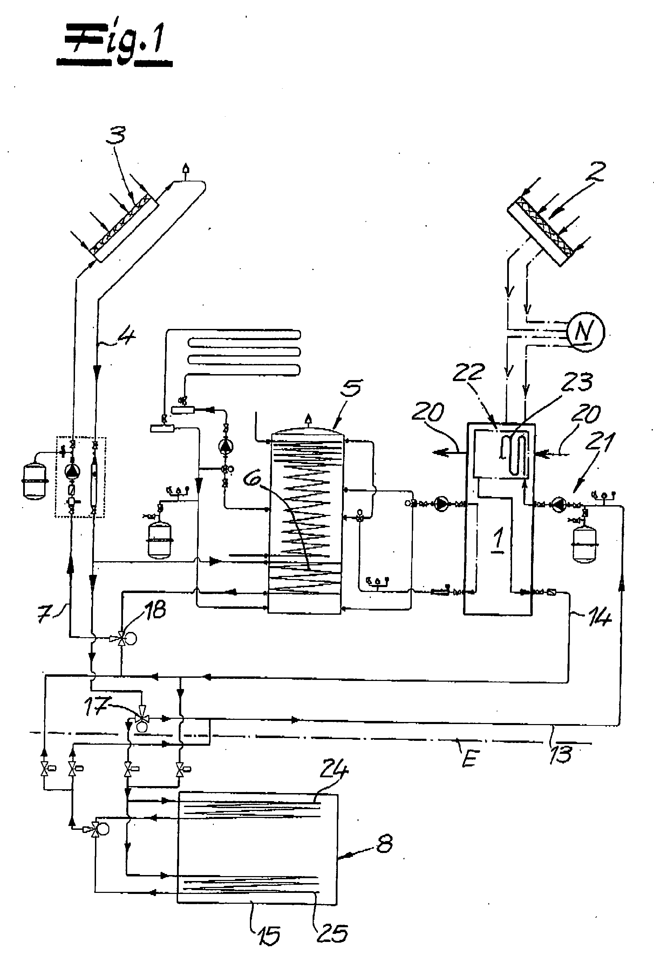

In der Ausführungsform nach Fig. 1 wird die thermische Energie aus der Solareinrichtung 3 über zumindest zwei in dem Speicherbehälter 15 angeordnete Wärmetauscher 24, 25 (interne Wärmetauscher) von dem Wärmeträgermedium auf das in dem Speicherbehälter 15 enthaltene Speichermedium getauscht. Das Wärmeträgermedium wird bei entsprechend eingestelltem Dreiwegeventil 18 über die Rückführungsleitung 7 wieder der Solareinrichtung 3 zugeführt.

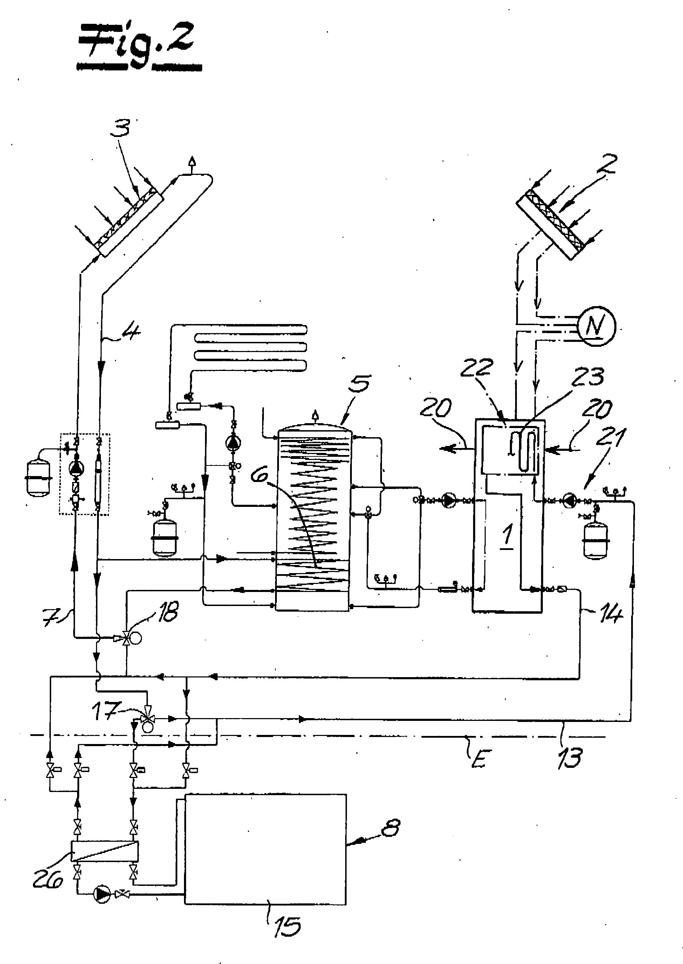

Im Ausführungsbeispiel gemäß Fig. 2 wird dagegen die thermische Energie aus der Solareinrichtung 3 über einen außerhalb des Speicherbehälters 15 angeordneten Wärmetauscher 26 (externer Wärmetauscher) von dem Wärmeträgermedium auf das Speichermedium getauscht. Das Speichermedium muss dazu aus dem Speicherbehälter 15 durch den externen Wärmetauscher 26 geführt werden. Das dort abgekühlte Wärmeträgermedium wird bei entsprechend eingestelltem Dreiwegeventil 18 über die Rückführungsleitung 7 wiederum der Solareinrichtung 3 zugeführt.

Die in der Erdspeichereinheit 8 zwischengespeicherte thermische Energie kann bei Bedarf mit dem flüssigen Wärmeträgermedium bei entsprechend eingestelltem Dreiwegeventil 17 über die Zuleitung 13 der Wärmepumpe 1 zugeführt werden. In der Wärmeübertragungseinrichtung 22 wird die thermische Energie zunächst von dem flüssigen Wärmeträgermedium auf angesaugte Umgebungsluft übertragen und die erwärmte Umgebungsluft dient dann als Wärmequelle für die Wärmepumpe 1. Die Wärmepumpe 1 stellt weitere thermische Energie zur Verfügung, um das fluide Medium auf die gewünschte Temperatur zu bringen. Das fluide Medium kann dann von der Wärmepumpe 1 zum Speicher 5 geführt werden. Das flüssige Wärmeträgermedium mit der zwischengespeicherten thermischen Energie wird insbesondere dann von der Erdspeichereinheit 8 zu der Wärmepumpe 1 geführt, wenn die Temperatur des in der Solareinrichtung 3 erwärmten Wärmeträgermediums geringer ist als die Temperatur des Speichermediums bzw. des Wärmeträgermediums in der Erdspeichereinheit 8 bzw. in dem Speicherbehälter 15. Wenn dagegen die Temperatur des Wärmeträgermediums in der Solareinrichtung 3 höher ist als die Temperatur des Wärmeträgermediums in der Erdspeichereinheit 8 wird das Wärmeträgermedium von der Solareinrichtung 3 bevorzugt unmittelbar zur Wärmepumpe 1 bzw. zur Wärmeübertragungseinrichtung 22 geführt oder wenn die Temperatur des Wärmeträgermediums in der Solareinrichtung 3 für eine unmittelbare Erwärmung des fluiden Mediums - ohne Zwischenschaltung der Wärmepumpe 1 - ausreicht, unmittelbar zum Wärmetauscher 6 in den Speicher 5 geführt.

Insbesondere wenn die thermische Energie aus der Solareinrichtung 3 und/oder die thermische Energie aus der Erdspeichereinheit 8 gering ist, kann die Wärmepumpe 1 in den ersten Betriebszustand umgeschaltet werden, in dem die Umgebungsluft unmittelbare Wärmequelle für die Wärmepumpe 1 ist. Durch Umschalten zwischen den beiden Betriebszuständen wird eine sehr effektive Nutzung von Umweltenergie erreicht und zwar mit hohem Wirkungsgrad.

Vorzugsweise und im Ausführungsbeispiel nach den Figuren handelt es sich bei der Wärmepumpe 1 um eine elektrisch betriebene Wärmepumpe 1. Zweckmäßigerweise stellt die Photovoltaikeinrichtung 2 die elektrische Energie zum Betrieb der Wärmepumpe 1 zur Verfügung. Dazu wird der von der Photovoltaikeinrichtung 2 erzeugte elektrische Strom zunächst in das öffentliche Stromnetz N eingespeist und die Wärmepumpe 1 wird dann aus dem Stromnetz 1 mit elektrischer Energie versorgt. Die Photovoltaikeinrichtung 2 weist zweckmäßigerweise eine Mehrzahl von Solarzellen bzw. Solarmodulen auf. Vorzugsweise und im Ausführungsbeispiel sind diese Komponenten bzw. die Solarzellen/Solarmodule der Photovoltaikeinrichtung 2 an der Außenseite des Gebäudes und insbesondere auf dem Dach des Gebäudes angeordnet. Es liegt im Rahmen der Erfindung, dass die Photovoltaikeinrichtung 2 mit der Maßgabe ausgelegt ist, dass sie die für den Betrieb der Wärmepumpe 1 erforderliche elektrische Energie zur Verfügung stellen kann bzw. zumindest größtenteils zur Verfügung stellen kann. Es liegt fernerhin im Rahmen der Erfindung, dass die Größe und/oder die Leistung und/oder die Anordnung der Photovoltaikeinrichtung entsprechend ausgelegt wird.

## Patentansprüche

1. Gebäudeheiz- und/oder -kühlvorrichtung mit zumindest einer Wärmepumpe (1) und mit zumindest einer Solareinrichtung (3) zur Erzeugung von thermischer Energie, wobei die thermische Energie auf ein fluides Medium übertragbar ist,
wobei die Wärmepumpe (1) zumindest zwei Betriebszustände aufweist, wobei im ersten Betriebszustand die Umgebungsluft Wärmequelle für die Wärmepumpe (1) ist,
wobei im zweiten Betriebszustand die mit der Solareinrichtung (3) erzeugte und auf ein flüssiges Wärmeträgermedium übertragene thermische Energie mittels einer Wärmeübertragungseinrichtung (22) auf die Umgebungsluft übertragbar ist und wobei die auf diese Weise erwärmte Umgebungsluft Wärmequelle für die Wärmepumpe (1) ist.

2. Gebäudeheiz- und/oder -kühlvorrichtung nach Anspruch 1, wobei im zweiten Betriebszustand das flüssige Wärmeträgermedium in der Wärmeübertragungseinrichtung (22) durch zumindest eine Leitung bzw. Rohrleitung (23) geführt wird, welche Leitung bzw. Rohrleitung (23) von der zu erwärmenden Umgebungsluft umströmt wird.

3. Gebäudeheiz- und/oder -kühlvorrichtung nach einem der Ansprüche 1 oder 2, wobei die Wärmepumpe (1) von dem ersten Betriebszustand in den zweiten Betriebszustand umschaltbar ist und umgekehrt.

4. Gebäudeheiz- undloder -kühlvorrichtung nach einem der Ansprüche 1 bis 3, wobei thermische Energie aus der Solareinrichtung (3) auch unmittelbar und ohne Zwischenschaltung der Wärmepumpe (1) auf das fluide Medium übertragbar ist.

5. Gebäudeheiz- und/oder -kühlvorrichtung nach einem der Ansprüche 1 bis 4, wobei die thermische Energie aus der Solareinrichtung (3) mit dem flüssigen Wärmeträgermedium unmittelbar zur Wärmepumpe (1) bzw. zur Wärmeübertragungseinrichtung (22) überführbar ist.

6. Gebäudeheiz- und/oder -kühlvorrichtung nach einem der Ansprüche 1 bis 5, wobei die Solareinrichtung (3) mit zumindest einer Speichereinheit mit der Maßgabe verbunden ist, dass in der Solareinrichtung (3) erzeugte thermische Energie der Speichereinheit zuführbar ist und in der Speichereinheit speicherbar bzw. zwischenspeicherbar ist und wobei diese gespeicherte thermische Energie unter Zwischenschaltung der Wärmeübertragungseinrichtung (22) bzw. der Wärmepumpe (1) auf das fluide Medium übertragbar ist.

7. Gebäudeheiz- und/oder -kühlvorrichtung nach Anspruch 6, wobei die Speichereinheit zumindest einen wärmeisolierten Speicherbehälter (15) mit einem Speichermedium für die Speicherung/Zwischenspeicherung der thermischen Energie aufweist.

8. Gebäudeheiz- und/oder -kühlvorrichtung nach einem der Ansprüche 6 oder 7, wobei die Speichereinheit als unterirdische Erdspeichereinheit (8) ausgebildet ist, die insbesondere in einer Tiefe von 0,5 bis 5 m im Erdreich E angeordnet ist.

9. Gebäudeheiz- und/oder -kühlvorrichtung nach einem der Ansprüche 6 oder 7, wobei die Speichereinheit als oberirdische bzw. überirdische Speichereinheit ausgebildet ist.

10. Gebäudeheiz- und/oder -kühlvorrichtung nach einem der Ansprüche 1 bis 9, wobei eine Photovoltaikeinrichtung (2) vorgesehen ist, mit der die Vorrichtung und insbesondere die Wärmepumpe (1) mit elektrischer Energie versorgt wird und zwar vorzugsweise indirekt unter Zwischenschaltung des öffentlichen Stromnetzes versorgt wird.

11. Verfahren zum Heizen und/oder Kühlen eines Gebäudes, wobei thermische Energie von zumindest einer Wärmepumpe (1) und von zumindest einer Solareinrichtung (3) erzeugt wird und auf ein fluides Medium übertragen wird,
wobei in einem ersten Betriebszustand der Wärmepumpe (1) Umgebungsluft als Wärmequelle für die Wärmepumpe (1) eingesetzt wird
und wobei in einem zweiten Betriebszustand, die mit der Solareinrichtung (3) erzeugte und auf ein flüssiges Wärmeträgermedium übertragene thermische Energie mittels einer Wärmeübertragungseinrichtung (22) auf die Umgebungsluft übertragen wird und wobei diese erwärmte Umgebungsluft als Wärmequelle für die Wärmepumpe (1) eingesetzt wird.

12. Verfahren nach Anspruch 11, wobei in der Solareinrichtung (3) thermische Energie auf das Wärmeträgermedium übertragen wird und wobei bei Erreichung bzw. Überschreitung einer Solltemperatur T₁ des Wärmeträgermediums die thermische Energie aus der Solareinrichtung (3) von dem Wärmeträgermedium unmittelbar ohne Zwischenschaltung der Wärmepumpe (1) auf das fluide Medium übertragen wird.

13. Verfahren nach einem der Ansprüche 11 oder 12, wobei bei Unterschreitung der Solltemperatur T₁ des Wärmeträgermediums das Wärmeträgermedium aus der Solareinrichtung (3) der Wärmeübertragungseinrichtung (22) zugeführt wird und thermische Energie von dem Wärmeträgermedium unter Zwischenschaltung der Wärmeübertragungseinrichtung (22) bzw. der Wärmepumpe (1) auf das fluide Medium übertragen wird.

14. Verfahren nach einem der Ansprüche 11 bis 13, wobei bei Überschreitung der Solltemperatur T₁ bzw. bei deutlicher Überschreitung der Solltemperatur T₁ des Wärmeträgermediums aus der Solareinrichtung (3) das Wärmeträgermedium der Speichereinheit 8 zugeführt wird und thermische Energie dort gespeichert bzw. zwischengespeichert wird und bei Bedarf von der Speichereinheit (8) der Wärmeübertragungseinrichtung (22) bzw. der Wärmepumpe 1 zugeführt wird und dort auf das fluide Medium übertragen wird.

15. Verfahren nach einem der Ansprüche 11 bis 14, wobei bei Unterschreitung einer Solltemperatur T₂ des Wärmeträgermediums aus der Solareinrichtung (3) bzw. bei Unterschreitung einer Solltemperatur T₂ des Speichermediums bzw. des Wärmeträgermediums in der Speichereinheit (8) auf den ersten Betriebszustand der Wärmepumpe (1) mit dem gasförmigen Wärmeträgermedium als Wärmequelle umgeschaltet wird.
